(19) Europäisches Patentamt
European Patent Office
Office européen des brevets

(11) EP 0 560 160 B1

(12) EUROPÄISCHE PATENTSCHRIFT

(45) Veröffentlichungstag und Bekanntmachung des Hinweises auf die Patenterteilung:
**23.08.2000 Patentblatt 2000/34**

(51) Int. Cl.[7]: **C08K 3/34**

(21) Anmeldenummer: **93103215.5**

(22) Anmeldetag: **01.03.1993**

(54) **Thermoplastische Formmassen enthaltend Mg-Al-Silikat**

Thermoplastic moulding composition containing Mg-Al-silicate

Masse de moulage thermoplastique contenant de Mg-Al-silicate

(84) Benannte Vertragsstaaten:
**DE FR GB IT**

(30) Priorität: **13.03.1992 DE 4208108**

(43) Veröffentlichungstag der Anmeldung:
**15.09.1993 Patentblatt 1993/37**

(60) Teilanmeldung:
**00103338.0 / 1 004 620**
**00103337.2 / 1 004 619**

(73) Patentinhaber: **BAYER AG**
**51368 Leverkusen (DE)**

(72) Erfinder:
- **Eckel, Thomas, Dr.**
  **W-4047 Dormagen 1 (DE)**
- **Wittmann, Dieter, Dr.**
  **W-5000 Köln 80 (DE)**
- **Ott, Karl-Heinz, Dr.**
  **W-5090 Leverkusen 1 (DE)**
- **Wulff, Claus H., Dr.**
  **W-4150 Krefeld (DE)**
- **Freitag, Dieter, Dr.**
  **W-4150 Krefeld 1 (DE)**

(56) Entgegenhaltungen:
**GB-A- 575 480**

- **PATENT ABSTRACTS OF JAPAN vol. 8, no. 172 (C-237)(1609) & JP-A-59 071 340 ( TOYODA CHUO KENKYUSHO )**
- **DEV. SEDIMENTOLOGY 3B (INT CLAY CONF 1981) 1981, Seiten 763 - 769 SOUZA SANTOS, RIEGO 'Effect of lithium treatment on the bulk densities of exfoliated vermiculites'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Xerox (UK) Business Services
2.16.7 (HRS)/3.6

## Beschreibung

Die Erfindung betrifft thermoplastische Formmassen aus thermoplastischen Polymeren, niedermolekularen Additiven und speziellen Magnesium-Aluminium-Silikaten.

Thermoplastische Polymere und Mischungen verschiedener thermoplastischer Polymerer spielen als Konstruktionswerkstoffe in der Technik eine bedeutende Rolle. Die meisten dieser Polymerzusammensetzungen enthalten neben Restmonomeren, Restlösungsmitteln und Oligomeren niedermolekulare Additive, die ihnen bestimmte Eigenschaften verleihen, z.B. Stabilisatoren, Farbstoffe, Entformungsmittel, Flammschutzmittel, Antistatika.

Solche niedermolekularen Additive treten wegen ihrer Flüchtigkeit bei den üblichen Verarbeitungstemperaturen (meist 200 bis 350°C), teilweise aus den thermoplastischen Zusammensetzungen aus, verlieren ihre Wirkung und verursachen Qualitätseinbußen wie Oberflächenstörungen an den Formteilen, Belagbildung an den Spritzgußwerkzeugen, Geruchsbelästigungen.

Es wurde gefunden, daß speziell vorbereitete Magnesium-Aluminium-Silikate niedermolekulare Additive in Polymeren soweit binden können, daß diese bei der Verarbeitung nicht ausdampfen. Diese Trägermaterialien beeinflussen die Eigenschaften thermoplastischer Polymerer nicht negativ, so daß z.B. die Zähigkeit nur geringfügig zurückgeht, die Oberflächenqualität erhalten bleibt und die Wärmeformbeständigkeit sowie die Beständigkeit gegenüber Chemikalien verbessert wird. Auch Flammschutzmittel, die im allgemeinen in größerer Menge eingesetzt werden müssen, verbleiben bei Verarbeitungstemperaturen im Polymeren und können im Brandfalle ihre Wirksamkeit voll entfalten.

Gegenstand der Erfindung sind thermoplastische Formmassen enthaltend:

A. 100 Gew.-Teile eines thermoplastischen Homopolymeren oder Copolymeren von ethylenisch ungesättigten Monomeren,

B. 0,1 bis 40, vorzugsweise 0,5 bis 20 Gew.-Teile eines Additives mit einem Molekulargewicht kleiner 2000 g/Mol, vorzugsweise kleiner 1000 g/Mol,
und

C. 0,5 bis 15 Gew.-Teile eines Magnesium-Aluminium-Silikates mit einem Schüttgewicht < 1 g/$cm^3$, vorzugsweise < 0,5 g/$cm^3$, besonders bevorzugt < 0,2 g/$cm^3$ und einem Teilchendurchmesser von 1 bis 5000 µm, vorzugsweise von 3 bis 500 µm, besonders bevorzugt von 5 bis 100 µm und einem Gehalt an Übergangsmetallverbindungen kleiner 5 Gew.-%, vorzugsweise 0 bis 1 Gew.-%, besonders bevorzugt 0 bis 0,5 Gew.-%, welches bei 700 bis 1000°C durch das verdampfende Kristallwasser expandiert und danach durch Behandlung mit Säuren erhältlich ist.

<u>Thermoplastische Polymere A</u>

Thermoplastische Polymere A sind Homopolymere oder Copolymere von ethylenisch ungesättigten Monomeren. Erfindungsgemäße thermoplastische Polymere A können auch Mischungen verschiedener Polymerer sein.

Das thermoplastische Polymer A umfaßt Homopolymere oder Copolymere von einem oder mehreren ethylenisch ungesättigten Monomeren (Vinylmonomeren) wie beispielsweise Ethylen, Propylen, Vinylacetat, Styrol, α-Methylstyrol, kernsubstituierte Styrole, Acrylnitril, Methacrylnitril, Methylmethacrylat, Maleinsäureanhydrid, N-substituierte-Maleinimide, Chloropren, Butadien-1,3, Isopropen sowie $C_1$-$C_{18}$-Alkylacrylate und -Methacrylate.

Als Vinylpolymerisate kommen in Frage:

- kautschukfreie Vinylpolymerisate (A.1)
- kautschukhaltige Vinylpolymerisate wie Pfropfpolymerisate von Vinylmonomeren auf einen Kautschuk (A.2)
- Mischungen aus kautschukfreien und kautschukhaltigen Vinylpolymerisaten.

Die Copolymeriste A.1 sind harzartig, thermoplastisch und kautschukfrei.

Bevorzugte Vinyl-Copolymerisate A.1 sind solche aus einerseits Styrol, α-Methylstyrol, kernsubstituiertem Styrol oder Mischungen (A.1.1) und andererseits Acrylnitril, Methacrylnitril, Methylmethacrylat, Maleinsäureanhydrid, N-substituiertes Maleinimid oder Mischungen (A.1.2).

Besonders bevorzugt enthalten die Copolymerisate A.1 50 bis 98 Gew.-% A.1.1 und 50 bis 2 Gew.-% A.1.2.

Besonders bevorzugte Copolymerisate A.1 sind solche aus Styrol, Acrylnitril und gegebenenfalls Methylmethacrylat, aus α-Methylstyrol, Acrylnitril und gegebenenfalls Methylmethacrylat sowie aus Styrol, α-Methylstyrol, Acrylnitril und gegebenenfalls Methylmethacrylat.

Die Styrol-Acrylnitril-Copolymerisate A.1 sind bekannt und lassen sich durch radikalische Polymerisation,

insbesondere durch Emulsions-, Suspensions-, Lösungs- oder Massepolymerisation herstellen. Die Copolymerisate A.1 besitzen vorzugsweise Molekulargewichte $\overline{M}_w$ (Gewichtsmittel, ermittelt durch Lichtstreuung oder Sedimentation) von 15.000 bis 200.000.

Weitere besonders bevorzugte Copolymerisate A.1 sind statistisch aufgebaute Copolymerisate aus Styrol und Maleinsäureanhydrid, die bevorzugt durch eine kontinuierliche Masse- oder Lösungspolymerisation bei unvollständigen Umsätzen aus dem entsprechenden Monomeren hergestellt werden. Ihre Zusammensetzung kann innerhalb weiter Grenzen variiert werden. Bevorzugt enthalten sie 5 bis 25 Gew.-% Maleinsäureanhydrideinheiten.

Anstelle von Styrol können die Polymeren auch kernsubstituierte Styrole, wie p-Methylstyrol, Vinyltoluol, 2,4-Dimethylstyrol und andere substituierte Styrole, wie α-Methylstyrol, enthalten.

Ihre Molekulargewichte (Zahlenmittel $\overline{M}$n) sind bevorzugt 60.000 bis 200.000. Bevorzugt besitzen sie eine Grenzviskosität von 0,3 bis 0,9 (gemessen in Dimethylformamid bei 25°C; siehe hierzu Hoffmann, Krömer, Kuhn, Polymeranalytik I, Stuttgart, 1977, Seite 316 ff.)

Die Vinylpolymerisate A.2 sind thermoplastisch und kautschukhaltig. Bevorzugte Vinylpolymerisate A.2 stellen Pfropfpolymerisate dar. Diese umfassen z.B. Pfropfcopolymerisate mit kautschukelastischen Eigenschaften, die im wesentlichen aus mindestens zwei der folgenden Monomeren erhältlich sind: Chloropren, Butadien-1,3, Isopropen, Styrol, Acrylnitril, Ethylen, Propylen, Vinyl-acetat und $C_1$-$C_{18}$-Alkylacrylate und -methacrylate. Solche Polymerisate sind z.B. in "Methoden der Organischen Chemie" (Houben-Weyl), Bd. 14/1, Georg Thieme-Verlag, Stuttgart, 1961, S. 393-406 und in C.B. Bucknall, "Toughened Plastics", Appl. Science Publishers, London 1977, beschrieben. Bevorzugte Polymerisate A.2 sind partiell vernetzt und besitzen Gelgehalte von über 20 Gew.-%, vorzugsweise über 40 Gew.-%, insbesondere über 60 Gew.-%.

Bevorzugte Vinylpolymerisate A.2 sind Pfropfpolymerisate aus:

A.2.1 5 bis 95, vorzugsweise 30 bis 80, Gew.-Teilen, einer Mischung aus

A.2.1.1 50 bis 95 Gew.-Teilen Styrol, α-Methylstyrol, halogen- oder methylkernsubstituierten Styrolen, Methylmethacrylat oder Mischungen dieser Verbindungen und

A.2.1.2 5 bis 50 Gew.-Teilen Acrylnitril, Methacrylnitril, Methylmethacrylat, Maleinsäuranhydrid, $C_1$-$C_4$-alkyl- bzw. phenyl-N-substituierten Maleinimiden oder Mischungen dieser Verbindungen auf

A.2.2 5 bis 95, vorzugsweise 20 bis 70, Gew.-Teile Kautschuk-Polymerisat mit einer Glasübergangstemperatur unter -10°C.

Bevorzugte Pfropfpolymerisate A.2 sind z.B. mit Styrol und/oder Acrylnitril und/oder Alkylacrylaten oder -Methacrylaten gepfropfte Polybutadiene, Butadien/Styrol-Copolymerisate und Acrylatkautschuke; d.h. Copolymerisate der in der DE-OS 1 694 173 (= US-PS 3 564 077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol- oder Butadien/Acrylnitril-Copolymerisate, Polyisobutene oder Polyisoprene, wie sie z.B. in der DE-OS 2 348 377 (= US-PS 3 919 353) beschrieben sind.

Besonders bevorzugte Polymerisate A.2 sind ABS-Polymerisate, wie sie z.B. in der DE-OS 2 035 390 (= US-PS 3 644 574) oder in der DE-OS 2 248 242 (= GB-PS 1 409 275) beschrieben sind.

Besonders bevorzugte Pfropfpolymerisate A.2 sind erhältlich durch Pfropfpolymerisation von

α. 10 bis 70, vorzugsweise 15 bis 50, insbesondere 20 bis 40 Gew.-%, bezogen auf Pfropfpolymerisat A.2, von Acrylsäureestern oder Methacrylsäureestern oder von 10 bis 70, vorzugsweise 15 bis 50, insbesondere 20 bis 40 Gew.-% eines Gemisches aus 10 bis 50, vorzugsweise 20 bis 35 Gew.-%; bezogen auf Gemisch, Acrylnitril, Acrylsäureester oder Methacrylsäureester und 50 bis 90, vorzugsweise 65 bis 80 Gew.-%, bezogen auf Gemisch, Styrol (α stellt die Pfropfmonomeren A 2.1 des Pfropfpolymersats A.2 dar) auf

β. 30 bis 90, vorzugsweise 50 bis 85, insbesondere 60 bis 80 Gew.-%, bezogen auf Pfropfpolymerisat A.2, eines Butadien-Polymerisats mit mindestens 50 Gew.-%, bezogen auf β, Butadienresten (β stellt die Pfropfgrundlage A.2.2 des Pfropypolymers A.2 dar),

wobei vorzugsweise der Gelanteil der Pfropfgrundlage β mindestens 70 Gew.-% (in Toluol gemessen), der Pfropfgrad G 0,15 bis 0,55 und der mittlere Teilchendurchmesser $d_{50}$ des Pfropfpolymerisats A.2 0,05 bis 2 µm, vorzugsweise 0,1 bis 0,6 µm beträgt.

Acrylsäureester bzw. Methacrylsäureester unter α sind Ester der Acrylsäure oder Methacrylsäure und einwertiger Alkohole mit 1 bis 18 C-Atomen. Besonders bevorzugt sind Methylmethacrylat, Ethylmethacrylat, Propylmethacrylat, n-Butylacrylat, t-Butylacrylat und t-Butylmethacrylat.

Das Butadienpolymerisat β kann neben Butadienresten bis zu 50 Gew.-%, bezogen auf β, Reste anderer ethylenisch ungesättigter Monomerer, wie Styrol, Acrylnitril, $C_1$-$C_4$-Alkylester oder Acryl- oder Methyacrylsäure (wie Methylacrylat, Ethylacrylat, Methylmethacrylat, Ethylmethacrylat), Vinylester und/oder Vinylether) enthalten. Bevorzugt ist Polybutadien.

Bei der Pfropfpolymerisation werden die Pfropfmonomeren bekanntlich nicht vollständig auf die Pfropfgrundlage polymerisiert; erfindungsgemäß schließen Pfropfpolymerisate A.2 aber Produkte ein, die durch Polymerisation der Pfropfmonomere in Gegenwart der Pfropfgrundlage gewonnen werden.

Der Pfropfgrad G ist das Gewichtsverhältnis von aufgepfropften Pfropfmomomeren zur Pfropfgrundlage (Dimensionslose Zahl).

Der mittlere Teilchendurchmesser $d_{50}$ ist der Durchmesser, oberhalb und unterhalb dessen jeweils 50 Gew.-% der Teilchen liegen. Er kann mittels Ultrazentrifugenmessung (w. Scholtan, H. Lange, Kolloid, Z. und Z. Polymere 250 (1972), 782-796) bestimmt werden.

Weitere besonders bevorzugte Polymerisate A.2 sind Pfropfpolymerisate aus

τ. 20 bis 90 Gew.-%, bezogen auf A.2, Acrylatkautschuk mit einer Glasübergangstemperatur unter -20°C (entspricht der Pfropfgrundlage A.2.2 des Pfropfpolymers A.2) und

δ. 10 bis 80 Gew.-%, bezogen auf A.2, mindestens eines polymerisierbaren, ethylenisch ungesättigten Monomeren, dessen bzw. deren in Abwesenheit von 1. entstandenen Homo- bzw. Copolymerisate eine Glasübergangstemperatur über 25°C hätten, (entspricht dem Pfropfmonomeren A.2.1. des Pfropfpolymers A.2).

Die Acrylatkautschuke τ der Polymerisate A.2 sind vorzugsweise Polymerisate aus Acrylsäurealkylestern, gegebenenfalls mit bis zu 40 Gew.-%, bezogen auf τ, anderen polymerisierbaren, ethylenisch ungesättigten Monomeren. Zu den bevorzugten polymerisierbaren Acrylsäureestern gehören $C_1$-$C_8$-Alkylester, beispielsweise Methyl-, Ethyl-, Butyl-, n-Octyl- und 2-Ethyl-hexylester; Halogenalkylester, vorzugsweise Halogen-$C_1$-$C_8$-alkyl-ester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykol-dimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0,02 bis 5, insbesondere 0,05 bis 2 Gew.-%, bezogen auf die Pfropfgrundlage τ.

Bei cyclischen vernetzenden Monomeren mit mindestens 3 ethylenisch ungesättigten Gruppen ist es vorteilhaft, die Menge auf unter 1 Gew.-% der Pfropfgrundlage τ zu beschränken.

Bevorzugte "andere" polymerisierbare, ethylenisch ungesättigte Monomere, die neben den Acrylsäureestern gegebenenfalls zur Herstellung der Pfropfgrundlage τ dienen können, sind z.B. Acrylnitril, Styrol, α-Methylstyrol, Acrylamide, Vinyl-$C_1$-$C_6$-Alkylether, Methylmethacrylat, Butadien. Bevorzugte Acrylatkautschuke als Pfropfgrundlage τ sind Emulsionspolymerisate, die einen Gelgehalt von mindestens 60 Gew.-% aufweisen.

Weitere geeignete Pfropfgrundlagen gemäß A.2.2 sind Silikonkautschuke mit pfropfaktiven Stellen, wie sie in DE-OS 37 04 657, DE-OS 37 04 655, DE-OS 36 31 540 und DE-OS 36 31 539 beschrieben werden.

Der Gelgehalt der Pfropfgrundlage A.2.2 wird bei 25°C in Dimethylformamid bestimmt (M. Hoffmann, H. Krömer, R. Kuhn, Polymeranalytik I und II, Georg-Thieme-Verlag, Stuttgart 1977).

Die Pfropfpolymerisate A. 2 können nach bekannten Verfahren wie Masse-, Suspensions-, Emulsions- oder Masse-Suspensionsverfahren hergestellt werden.

Additive B

Geeignete niedermolekulare Additive können Stabilisatoren, Farbstoffe, Entformungsmittel, Antistatika oder Flammschutzmittel sein, die den thermoplastischen Polymeren in den üblichen Mengen zugesetzt werden.

Die erfindungsgemäßen Additive sind niedermolekular, d.h. sie weisen Molekulargewichte kleiner 2000 g/mol, vorzugsweise kleiner 1000 g/mol auf.

Bevorzugte Additive B im Sinne der Erfindung sind Flammschutzmittel. Dabei sind sowohl halogenhaltige als auch halogenfreie Verbindungen geeignet.

Vorzugsweise als Halogenverbindungen geeignet sind organische Chlor- und/oder Bromverbindungen, die bei der Herstellung und Verarbeitung der erfindungsgemäßen Formmassen stabil sind, so daß keine korrosiven Gase freigesetzt werden und die Wirksamkeit dadurch nicht beeinträchtigt wird.

Bevorzugte Additive B sind beispielsweise

1. Chlorierte und bromierte Diphenyle, wie Octachlordiphenyl, Decachlordiphenyl, Octabromdiphenyl, Decabromdiphenyl.

2. Chlorierte und bromierte Diphenylether, wie Octa- und Decachlordiphenylether und Octa- und Decabromdiphenylether.

3. Chloriertes und bromiertes Phthalsäureanhydrid und seine Derivate, wie Phthalimide und Bisphthalimide, z.B. Tetrachlor- und Tetrabromphthalsäureanhydrid, Tetrachlor- und Tetrabromphthalimid, N,N'-Ethylen-bis-tetrachlor- und N,N'-Ethylen-bis-tetrabromphthalimid, N-Methyltetrachlor- und N-Methyltetrabromphthalimid.

4. Chlorierte und bromierte Bisphenole, wie 2,2-Bis-(3,5-di-chlor-4-hydroxyphenyl)-propan und 2,2-Bis-(3,5-di-brom-4-hydroxyphenyl)-propan.

5. 2,2-Bis-(3,5-di-chlor-4-hydroxyphenyl)-propan-Oligocarbonat und 2,2-Bis-(3,5-di-brom-4-hydroxyphenyl)-propan-Oligocarbonat mit einem mittleren Polykondensationsgrad von 2-20.

Bromverbindungen werden gegenüber den Chlorverbindungen bevorzugt.

Besonders bevorzugte Flammschutzadditive stellen halogenfreie Verbindungen dar.

Als Additive B geeignet sind alle üblicherweise als Flammschutzmittel einsetzbaren Phosphorverbindungen, insbesondere Phosphinoxide und Derivate von Säuren des Phosphors und Salze von Säuren und Säurederivaten des Phosphors.

Bevorzugt werden Derivate von Säuren des Phosphors und deren Salze, wobei darunter im Sinne der vorliegenden Erfindung Derivate (beispielsweise Ester) der Phosphorsäure, Phosphonsäure, Phosphinsäure, phosphorigen Säure, auch jeweils in dehydratisierter Form, sowie Alkali-, Erdalkali- und Ammoniumsalze dieser Säuren bzw. deren Derivate (beispielsweise teilveresterter Säuren) zu verstehen sind.

Besonders bevorzugte Phosphorverbindungen sind solche der Formel (VIII)

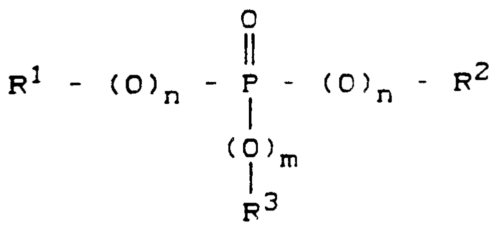

(VIII)

in denen $R^1$, $R^2$ und $R^3$ unabhängig voneinander ein gegebenenfalls halogeniertes $C_1$-$C_8$-Alkyl oder ein gegebenenfalls halogeniertes und/oder alkyliertes $C_5$- oder $C_6$-Cycloalkyl oder ein gegebenenfalls halogeniertes und/oder alkyliertes und/oder aralkyliertes $C_6$-$C_{30}$-Aryl, und "n" und "m" unabhängig voneinander 0 oder 1 sind.

Derartige Phosphorverbindungen sind generell bekannt (siehe beispielsweise Ullmann, Enzyklopädie der technischen Chemie, Band 18, Seiten 301 ff, 1979). Die aralkylierten Phosphorverbindungen sind beispielsweise in der DE-OS 38 24 356.0 beschrieben.

Gegebenenfalls halogenierte $C_1$-$C_8$-Alkylreste gemäß (VIII) können einfach oder mehrfach halogeniert, linear oder verzweigt sein. Beispiele für Alkylreste sind Chlorethyl, 2-Chlorpropyl, 2,3-Dibrompropyl, Butyl, Methyl oder Octyl.

Gegebenenfalls halogenierte und/oder alkylierte $C_5$- oder $C_6$-Cycloalkyle gemäß (VIII) sind gegebenenfalls einfach bis mehrfach halogenierte und/oder alkylierte $C_5$- oder $C_6$-Cycloalkyle, also z.B. Cyclopentyl, Cyclohexyl, 3,3,5-Trimethylcyclohexyl und vollchloriertes Cyclohexyl.

Gegebenenfalls halogenierte und/oder alkylierte und/oder aralkylierte $C_6$-$C_{30}$-Arylreste gemäß (VIII) sind

gegebenenfalls ein oder mehrkernig, einfach oder mehrfach halogeniert und/oder alkyliert und/oder aralkyliert, z.B. Chlorphenyl, Bromphenyl, Pentachlorphenyl, Pentabromphenyl, Phenyl, Kresyl, Isopropylphenyl, benzyl-substituiertes Phenyl und Naphthyl.

Erfindungsgemäß einsetzbare Phosphorverbindungen gemäß Formel (VIII) sind z.B. Tributylphosphat, Tris-(2-chlorethyl)phosphat, Tris-(2,3-dibrompropyl)phosphat, Triphenylphosphat, Trikresylphosphat, Diphenylkresylphosphat, Diphenyloctylphosphat, Diphenyl-2-ethylkresylphosphat, Tri-(isopropylphenyl)phosphat, Tris-(p-benzylphenyl)phosphat, Triphenylphosphinoxid, Methanphosphonsäuredimethylester, Methanphosphonsäuredipenthylester und Phenylphosphonsäurediethylester.

Geeignete Flammschutzmittel sind auch dimere und oligomere Phosphate, deren Molekulargewicht kleiner 2000 g/Mol, vorzugsweise kleiner 1000 g/Mol ist. Diese sind beispielsweise in der euroäpischen Anmeldung EP-A 0 363 608 beschrieben.

Magnesium-Aluminium-Silikate C

Silikate C im Sinne der Erfindung sind Magnesium-Aluminium-Silikate. Diese zur Gruppe der Glimmerminerale gehörenden Silikate bestehen aus dünnen, flachen Plättchen und zeichnen sich durch Kristallwassergehalte > 5 % aus.

Damit diese Silikate als anorganische Trägermaterial für Additive in thermoplastischen Polymeren wirksam sind, müssen mehrere spezielle Vorbereitungsschritte durchlaufen werden:

A) Bei hohen Temperaturen, vorzugsweise zwischen 700 und 1100°C, wird das Silikat durch das verdampfende Kristallwasser expandiert. Dabei vergrößert sich das Volumen um das 10- bis 30-fache und es entstehen innere Hohlräume. Das Schüttgewicht des Aluminium-Silikats wird vom Ausgangsniveau im Bereich 2 bis 3 $g/cm^3$ auf Werte kleiner 1 $g/cm^3$, vorzugsweise < 0,5 $g/cm^3$, insbesondere < 0,2 $g/cm^3$ erniedrigt.

B) Das expandierte Silikat wird mit Säuren, vorzugsweise Salzsäure oder Schwefelsäure, behandelt, um störende Übergangsmetallverbindungen wie beispielsweise Oxide oder Hydroxide von Eisen, Mangan, Chrom oder anderen zu entfernen. Je nach Polymeren kann z.B. die Basizität oder Lewis-Säure-Aktivität stören, bei praktisch allen Polymeren ist eine Eigenfarbe des Trägermaterials unerwünscht.

Um eine Beeinträchtigung der thermoplastischen Polymere zu vermeiden, ist es erforderlich, die Menge an Übergangsmetallverbindungen auf < 5 Gew.%, vorzugsweise < 1 %, insbesondere < 0,5 % zu reduzieren.

Die Teilchen der speziell vorbehandelten Silikate sollen vorzugsweise Durchmesser von 3 bis 500 µm, insbesondere von 5 bis 100 µm haben. Sind die Teilchen kleiner, dann verliert das Material die Fähigkeit zur Adsorption niedermolekularer Verbindungen, sind sie größer, dann werden die mechanischen Eigenschaften der Formmassen beeinträchtigt.

Die erfindungsgemäßen Formmassen können zusätzlich höhermolekulare Additive, Glasfaser oder Polymere, die nicht thermoplastisch verarbeitbar sind wie beispielsweise Polytetrafluorethylen, in den üblichen Mengen enthalten.

Die erfindungsgemäßen Formmassen können hergestellt werden, indem man die Bestandteile in bekannter Weise vermischt und bei erhöhten Temperaturen, vorzugsweise bei 200 bis 350°C, in üblichen Vorrichtungen, wie Innenknetern, Extrudern oder Doppelwellenschnecken, schmelzcompoundiert oder schmelzextrudiert. Die Bestandteile können nacheinander oder gleichzeitig gemischt werden. In speziellen Fällen kann es günstig sein, aus den niedermolekularen Additiven und den Magnesium-Aluminium-Silikaten Vormischungen herzustellen.

Weiterer Gegenstand der Erfindung ist also ein Verfahren zur Herstellung der beschriebenen Formmassen durch Mischen der Komponenten bei erhöhter Temperatur.

Die erfindungsgemäßen Formmassen können zur Herstellung von Formkörpern jeder Art, z.B. durch Spritzgießen, verwendet werden. Beispiele für Formkörper sind:

Gehäuseteile (z.B. für Haushaltsgeräte wie Saftpressen, Kaffeemaschinen, Mixer), Abdeckplatten für das Baugewerbe oder Automobilteile. Sie werden außerdem für elektrische Geräte, z.B. für Steckerleisten, eingesetzt, weil sie sehr gute elektrische Eigenschaften haben.

Formkörper können auch durch Tiefziehen aus vorher hergestellten Platten oder Folien hergestellt werden.

Weiterer Gegenstand der Erfindung ist also die Verwendung der beschriebenen Formmassen zur Herstellung von Formkörpern.

Beispiele

Thermoplastische Polymere A

A1 Lineares Bisphenol A-Polycarbonat mit einer relativen Lösungsviskosität von 1,26 bis 1,28 (gemessen in $CH_2Cl_2$ bei 25°C und in einer Konzentration von 0,5 g/100 ml.

A2 Styrol/Acrylnitril-Copolymeriat (Styrol/Acrylnitril-Gew.-Verhältnis 72:28) mit einer Grenzviskosität von 0,55 dl/g (Messung in Dimethylformamid bei 20°C).

A3 Pfropfpolymerisat von 45 Gew.-Teilen Styrol und Acrylnitril im Verhältnis 72:28 auf 55 Gew.-Teile teilchenförmigen vernetzten Polybutadienkautschuk (mittlerer Teilchendurchmesser $d_{50}$ = 0,4 µm), hergestellt durch Emulsionspolymerisation.

A4 Pfropfpolymerisat A3 + Polytetrafluorethylen

Das Tetrafluorethylenpolymerisat wird als koagulierte Mischung aus einer SAN-Pfropfpolymerisat-Emulsion gemäß A3 in Wasser und einer Tetrafluorethylenpolymerisat-Emulsion in Wasser eingesetzt. Das Gewichtsverhältnis Pfropfpolymerisat A3 zum Tetrafluorethylenpolymerisat in der Mischung ist 90 Gew.-% zu 10 Gew.-%. Die Tetrafluorethylenpolymerisat-Emulsion besitzt einen Feststoffgehalt von 60 Gew.-%, die Teilchengröße liegt zwischen 0,05 und 0,5 µm. Die SAN-Pfropfpolymerisat-Emulsion besitzt einen Feststoffgehalt von 34 Gew.-% und eine mittlere Latexteilchengröße von 0,4 µm.

Additive B

Triphenylphosphat (Molekulargewicht 326,3 g/mol)

Silikate C

Ein expandiertes Magnesium-Aluminium-Silikat (Handelsname Vermiculit, Fa. Klein) mit einem Schüttgewicht von 0,11 g/cm$^3$ wurde zunächst mit Wasser behandelt. Dabei wurden sowohl die leichteren Bestandteile (organische Reste) als auch schwere, nicht expandierte Gesteinsreste abgetrennt. Anschließend wurde das Material ca. 30 Minuten in halbkonzentrierter Schwefelsäure gerührt, um die Übergangsmetallverbindungen, die sich bei der Verarbeitung störend auf die thermoplastischen Polymere auswirken, herauszulösen. Das zurückbleibende weiße Pulver (Schüttgewicht: 0,15 g/cm$^3$) wurde gewaschen, getrocknet und mit der vierfachen Menge Triphenylphosphat in der Schmelze intensiv gemischt. Nach Erkalten der Schmelze war das zerkleinerte Material (Vormischung aus Magnesium-Aluminium-Silikat und Triphenylphosphat im Gewichtsverhältnis 1:4) in den Mischungen mit den Polymeren einsatzbereit.

Herstellung und Prüfung der erfindungsgemäßen Formmassen

Die Bestandteile A, B und C wurden auf einem 3 l-Innenkneter bei Temperaturen von 210 bis 250°C aufgeschmolzen und homogenisiert.

Von den Formmassen wurden auf einer Spritzgußmaschine Stäbe der Abmessung 80 x 10 x 4 mm$^3$ (Verarbeitungstemperatur: 260°C) hergestellt, an denen die Kerbschlagzähigkeit (nach Methode ISO 180) bei Raumtemperatur gemessen wurde.

Die Bestimmung der Wärmeformbeständigkeit nach Vicat B erfolgte gemäß DIN 53 460.

Das Brandverhalten der Proben wurde nach UL-Subj. 94 V an Stäben der Abmessung 127 x 12,7 x 1,6 mm gemessen, hergestellt auf einer Spritzgußmaschine bei 280°C.

Der UL 94 V-Test wird wie folgt durchgeführt:

Substanzproben werden zu Stäben der Abmessung 127 x 12,7 x 1,6 mm geformt. Die Stäbe werden vertikal so montiert, daß die Unterseite des Probekörpers sich 305 mm über einem Streifen Verbandstoff befindet. Jeder Probestab wird einzeln mittels zweier aufeinanderfolgender Zündvorgänge von 10 s Dauer entzündet, die Brenneigen schaften nach jedem Zündvorgang werden beobachtet und danach die Probe bewertet. Zum Entzünden der Probe wird ein Bunsenbrenner mit einer 10 mm (3,8 inch) hohen blauen Flamme von Erdgas mit einer Wärmeeinheit von 3,73 x 10$^4$ kJ/m$^3$ (1000 BUT per cubic foot) benutzt.

Die UL 94 V-O-Klassifizierung umfaßt die nachstehend beschriebenen Eigenschaften von Materialien, die gemäß der UL 94 V-Vorschrift geprüft wurden. Die Formmassen in dieser Klasse enthalten keine Proben, die länger als 10 s nach jeder Einwirkung der Testflamme brennen; sie zeigen keine Gesamtflammzeit von mehr als 50 s bei der zweimaligen Flammeinwirkung auf jeden Probensatz; sie enthalten keine Proben, die vollständig bis hinaus zu der am oberen Ende der Probe befestigten Halteklammer abbrennen; sie weisen keine Proben auf, die die unterhalb der Probe angeordnete Watte durch brennende Tropfen oder Teilchen entzünden; sie enthalten auch keine Proben, die länger als 30 s nach Entfernen der Testflamme glimmen.

Andere UL 94-Klassifizierung bezeichnen Proben, die weniger flammwidrig und selbstverlöschend sind und die flammende Tropfen oder Teilchen abgeben. Diese Klassifizierungen werden mit UL 94 V-1 und V-2 bezeichnet. N.B. heißt "nicht bestanden" und ist die Klassifizierung von Proben, die eine Nachbrennzeit von ≥ 30 s aufweisen.

Eine Zusammenstellung der Eigenschaften der erfindungsgemäßen Formmassen findet sich in nachfolgender Tabelle.

Tabelle 1

| Zusammensetzung und Eigenschaften der Formmassen | | | | | | | | | |
|---|---|---|---|---|---|---|---|---|---|
| Beispiel | Komponenten | | | | | | UL 94 V 1,6 mm[1]) | $a_k$ [kJ/m²] | Vicat VST/$B_{120}$ [°C] |
| | A1 | A2 | A3 | A4 | B | C | | | |
| [Gew.-Teile] | | | | | | | | | |
| 1(Vgl.) | 65 | 15 | 5 | 3 | 12 | - | V O | 21 | 90 |
| 2 | 65 | 15 | 5 | 3 | - | 10[2]) | V O | 21 | 102 |
| 3(Vgl.) | 65 | 15 | 5 | 3 | 10 | - | V 1 | 22 | 96 |
| 4(Vgl.) | 65 | 15 | 5 | 3 | 8 | - | n.b. | 33 | 102 |

[1]) Konditionierung der Prüfkörper 7 Tage bei 23°C und 50 %
[2]) Effektiver Gehalt Triphenylphosphat 8 Gew.-Teile

Aus Tabelle 1 wird deutlich, daß nur das erfindungsgemäße Beispiel 2 eine optimale Eigenschaftskombination aus Brandwidrigkeit, hoher Wärmeformbeständigkeit und guter Kerbschlagzähigkeit bietet. Gleichzeitig zeigt sich auch die Verbesserung der Additiv-Effektivität durch den Zusatz des Magnesium-Aluminium-Silikats. Dabei wird das günstige Brandverhalten bereits bei einem effektiven Triphenylphosphatgehalt von 8 Gew.-Teilen erreicht, die entsprechenden Vergleichsbeispiele 3 und 4 mit 10 bzw. 8 Gew.-Teilen Triphenylphosphat zeigen dagegen ein deutlich schlechteres Brandverhalten.

**Patentansprüche**

**1.** Thermoplastische Formmassen enthaltend

A. 100 Gew.-Teile eines thermoplastischen Homopolymeren oder Copolymeren von ethylenisch ungesättigten Monomeren,

B. 0,1 bis 40 Gew.-Teile eines Additives mit einem Molekulargewicht kleiner 2000 g/Mol,
und

C. 0,5 bis 15 Gew.-Teile eines Magnesium-Aluminium-Silikates mit einem Schüttgewicht kleiner 1 g/cm3, einem Teilchendurchmesservon 1 bis 5000 µm, und einem Gehalt an Übergangmetallverbindungen kleiner 5 Gew.-%, welches bei 700 bis 1100 °C durch das verdampfende Kristallwasser expandiert und danach durch Behandlung mit Säuren erhältlich ist.

**2.** Formmassen gemäß Anspruch 1, enthaltend als A thermoplastische Vinylcopolymerisate aus

50 bis 98 Gew.-%. Styrol, α-Methylstyrol, kernsubstituiertem Styrol, Methylmethacrylat oder Mischungen daraus und

50 bis 2 Gew.-% Acrylnitril, Methacrylnitril, Methylmethacrylat, Maleinsäureanhydrid, N-substituiertem Maleinimid und Mischungen daraus.

**3.** Formmassen gemäß Anspruch 1, enthaltend als A Pfropfpolymerisate harzbildender Vinylmonomerer auf einen Kautschuk.

**4.** Formmassen gemäß Anspruch 3, worin die Pfropfpolymerisate erhalten werden durch Pfropfpolymerisation von

5 bis 95 Gew.-Teilen, einer Mischung aus

50 bis 95 Gew.-Teilen Styrol, α-Methylstyrol, halogen- oder alkylkernsubstituierten Styrolen, $C_1$-$C_8$-Alkylmethacrylaten, $C_1$-$C_8$-Alkylacrylaten oder Mischungen dieser Verbindungen und

5 bis 50 Gew.-Teilen Acrylnitril, Methacrylnitril, $C_1$-$C_8$-Alkylmethacrylaten, $C_1$-$C_8$-Alkylacrylaten, Maleinsäureanhydrid, $C_1$-$C_4$-alkyl- bzw. phenyl-N-substituierten Maleinimiden oder Mischungen dieser Verbindungen auf

5 bis 95 Gew.-Teile Kautschuk mit einer Glasübergangstemperatur unter -10°C.

**5.** Formmassen gemäß Anspruch 3 und 4, worin der Kautschuk ein Dienkautschuk, Acrylatkautschuks Silikonkautschuk oder Ethylen-Propylen-Dien-Kautschuk ist.

**6.** Formmassen gemäß Anspruch 1, enthaltend als B Flammschutzmittel.

**Claims**

**1.** Thermoplastic moulding compositions containing

A. 100 parts by weight of a thermoplastic homopolymer or copolymer of ethylenically unsaturated monomers,

B. 0.1 to 40 parts by weight of an additive having a molecular weight of less than 2000 g/mol,
and

C. 0.5 to 15 parts by weight of a magnesium/aluminium silicate having a bulk density of less than 1 $g/cm^3$, a particle diameter of 1 to 5000 μm and a content of transition metal compounds of less than 5 wt.%, which silicate expands at 700 to 1100°C due to vaporisation of the water of crystallisation and is then obtainable by treatment with acids.

**2.** Moulding compositions according to claim 1, containing as A thermoplastic vinyl copolymers prepared from

50 to 98 wt.% of styrene, α-methylstyrene, ring-substituted styrene, methyl methacrylate or mixtures thereof and

50 to 2 wt.% of acrylonitrile, methacrylonitrile, methyl methacrylate, maleic anhydride, N-substituted maleimide and mixtures thereof.

**3.** Moulding compositions according to claim 1 containing as A graft polymers of resin-forming vinyl monomers on a rubber.

**4.** Moulding compositions according to claim 3, in which the graft polymers are obtained by graft polymerisation of

5 to 95 parts by weight of a mixture of

50 to 95 parts by weight of styrene, α-methylstyrene, halogen or alkyl ring-substituted styrenes, $C_1$-$C_8$ alkyl methacrylates, $C_1$-$C_8$ alkyl acrylates or mixtures of these compounds and

5 to 50 parts by weight of acrylonitrile, methacrylonitrile, $C_1$-$C_8$ alkyl methacrylates, $C_1$-$C_8$ alkyl acrylates, maleic anhydride, $C_1$-$C_4$ alkyl- or phenyl-N-substituted maleimides or mixtures of these compounds on

5 to 95 parts by weight of rubber having a glass transition temperature of below -10°C.

**5.** Moulding compositions according to claims 3 and 4, in which the rubber is a diene rubber, acrylate rubber, silicone rubber or ethylene/propylene/diene rubber.

**6.** Moulding compositions according to claim 1 containing flame retardant as B.

**Revendications**

**1.** Masses de moulage thermoplastiques contenant

A. 100 parties en poids d'un homopolymère ou copolymère thermoplastique de monomères insaturés éthyléniquement,
B. 0,1 à 40 parties en poids d'un additif avec une masse moléculaire inférieure à 2000 g/mole, et
C. 0,5 à 15 parties en poids d'un silicate de magnésium-aluminium avec une densité apparente inférieure à 1 $g/cm^3$, un diamètre de particules de 1 à 5000 µm, et une teneur en composés métalliques de transition inférieure à 5% en poids, qui s'expanse de 700 à 1100°C par l'eau de cristallisation qui se vaporise et que l'on peut ensuite préparer par traitement avec des acides.

**2.** Masses de moulage selon la revendication 1, contenant comme copolymère vinylique thermoplastique A de

50 à 98% en poids de styrène, α-méthylstyrène, styrène substitué sur le noyau, méthacrylate de méthyle ou les mélanges de ceux-ci
et
50 à 2% en poids d'acrylonitrile, méthacrylonitrile, méthacrylate de méthyle, anhydride de l'acide maléique, maléimide N-substitué et les mélanges de ceux-ci.

**3.** Masses de moulage selon la revendication 1, contenant comme composant A un polymère greffé de monomères vinyliques formant des résines sur un caoutchouc.

**4.** Masses de moulage selon la revendication 3, dans lesquelles les polymères greffés sont obtenus par polymérisation par greffage de

5 à 95 parties en poids, d'un mélange composé de :

50 à 95 parties en poids de styrène, d'α-méthylstyrène, de styrène substitué sur le noyau par un halogène ou un groupe alkyle, de méthacrylates d'alkyle en $C_1$ à $C_8$, d'acrylates d'alkyle en $C_1$ à $C_8$ ou des mélanges de ces composés et
5 à 50 parties en poids d'acrylonitrile, de méthacrylonitrile, de méthacrylates d'alkyle en $C_1$ à $C_8$, d'acrylates d'alkyle en $C_1$ à $C_8$, d'anhydride d'acide maléique, de maléimides N-substitués par un groupe alkyle en $C_1$ à $C_4$, respectivement phényle ou des mélanges de ces composés,

5 à 95 parties en poids d'un caoutchouc avec une température de transition vitreuse inférieure à -10°C.

**5.** Masses de moulage selon la revendication 3 et 4, dans lesquelles le caoutchouc est un caoutchouc diène, un caoutchouc acrylate, un caoutchouc de silicone ou un caoutchouc éthylène-propylène-diène.

**6.** Masses de moulage selon la revendication 1, contenant comme composant B un agent ignifuge.